# EUROPÄISCHE PATENTSCHRIFT

(11) **EP 2 033 543 B1**
(45) Veröffentlichungstag und Bekanntmachung des Hinweises auf die Patenterteilung: **23.11.2011**
(21) Anmeldenummer: 08015407.3
(22) Anmeldetag: 01.09.2008
(51) Int. Cl.: A47C 23/06

(54) **Lattenrostlatte**
Slatted frame slat
Latte de sommier à lattes

(30) Priorität: 07.09.2007 DE 202007012580 U
(43) Veröffentlichungstag der Anmeldung: 11.03.2009
(73) Patentinhaber: Sennar, Akpinar, 32278 Kirchlengern (DE)
(72) Erfinder: Sennar, Akpinar, 32278 Kirchlengern (DE)
(74) Vertreter: Wiebusch, Manfred

(56) Entgegenhaltungen:
- DE-U1-202007 001 617
- ES-A1- 2 120 319
- ES-A1- 2 150 842
- ES-A1- 2 152 141
- JP-A- 63 270 931
- US-A- 5 058 223

## Beschreibung

Die Erfindung betrifft eine Lattenrostlatte aus Kunststoff, die in ihrer Gebrauchsstellung konvex nach oben vorgewölbt ist und an der Unterseite mindestens einen einstückig angeformten, rechtwinklig zur Lattenebene orientierten Versteifungssteg aufweist, dessen Höhe von der Mitte zu den Enden hin abnimmt, wobei der Versteifungssteg zu den Enden der Latte hin in Endabschnitte ausläuft, die eine konstante Höhe haben, und an der Unterseite der Latte an jedem Ende mindestens eine zusätzliche Verstärkungsrippe vorgesehen ist, die außen einen Endabschnitt mit konstanter Höhe aufweist.

Lattenroste für Betten weisen bisher üblicherweise Latten auf, die durch mehrere miteinander verleimte Schichten aus Holz gebildet werden. Die Latten sind zumeist derart vorgebogen, daß sie in der Gebrauchsstellung konvex nach oben gewölbt sind.

Eine flache, also nicht vorgewölbte Lattenrostlatte aus Kunststoff ist aus DE 1 955 029 A bekannt. JP 63 270931 A zeigt eine gewölbte Latte mit Versteifungssteg. US 5 058 223 zeigt eine Lattenrostlatte nach dem Oberbegriff des Anspruchs 1. Es erweist sich jedoch als schwierig, Lattenrostlatten aus Kunststoff so zu gestalten, daß ihre elastischen Eigenschaften den Anforderungen genügen, die hinsichtlich Liegekomfort und gesunder Liegehaltung an moderne Lattenroste gestellt werden.

Aufgabe der Erfindung ist es deshalb, eine Lattenrostlatte aus Kunststoff zu schaffen, die einen hohen Liegekomfort und ein gesundes Liegen ermöglicht und eine erhöhte Bruchsicherheit aufweist.

Diese Aufgabe wird erfindungsgemäß dadurch gelöst, daß sich an den Endabschnitt nach innen ein verstärkter Abschnitt anschließt, dessen Höhe zum inneren, zur Mitte der Lattenrostlatte weisenden Ende hin stetig zunimmt.

Durch die Vorwölbung und durch die zusätzliche Versteifung mit Hilfe mindestens eines Versteifungssteges wird bei der erfindungsgemäßen Latte ein Biegeverhalten erreicht das dem herkömmlicher Lattenrostlatten aus Holz mindestens ebenbürtig ist. Generell wird durch die von der Mitte zu den Enden hin abnehmende Höhe des Versteifungssteges erreicht, daß die Latte in ihrem mittleren Bereich eine höhere Biegesteifigkeit als an den Enden aufweist. Dieser Effekt läßt sich mit herkömmlichen Latten aus Holz nicht ohne weiteres erreichen und erweist sich im Hinblick auf den Liegekomfort und eine gesunde Liegehaltung als besonders vorteilhaft. Die Latte weist an der Unterseite in beiden Endabschnitten zusätzliche Verstärkungsrippen auf, die unmittelbar an den Enden der Latten die eine gleichbleibende Höhe haben, jedoch an den besonders belasteten Stellen, an denen die Latte aus dem Schuh austritt und an denen die Endabschnitte der Versteifungsstege in den Mittelabschnitt mit variierender Höhe übergehen, zusätzlich verstärkt sind. Vorteilhafte Ausgestaltungen sind in den Unteransprüchen angegeben. Die Lattenrostlatte besteht vorzugsweise aus glasfaserverstärktem Kunststoff, beispielsweise aus Polyamid 6 mit 30% Glasfasern.

Die Latten haben an den Enden eine gleichbleibende Dicke, was es erlaubt, sie wie herkömmliche Holzlatten in Schuhe eines Lattenrostrahmens einzuschieben.

Beispielsweise kann die Änderung der Höhe des Versteifungssteges weitgehend mit der durch die Vorwölbung der Latte bedingten Höhenänderung der oberen Oberfläche der Latte übereinstimmen. Der untere Rand des Versteifungssteges kann dabei wahlweise gerade oder auch gewellt sein. Durch geeignete Gestaltung der Wellen bzw. des Höhenprofils des Versteifungssteges läßt sich die Elastizität der Latte gezielt einstellen.

In einer besonders bevorzugten Ausführungsform sind zwei parallele Versteifungsstege vorgesehen, und zusätzlich weist die Latte an ihren Längsrändern nach unten gekröpfte Randflansche auf.

Die Versteifungsstege gehen an beiden Enden in Abschnitte über, die eine konstante Höhe haben, die vorzugsweise mit der Höhe der Flansche identisch ist.

Im folgenden werden Ausführungsbeispiele anhand der Zeichnung näher erläutert.

### Es zeigen:

- Fig. 1: eine Seitenansicht einer Lattenrostlatte gemäß einer Ausfüh- rungsform der Erfindung;
- Fig. 2: eine perspektivische Ansicht eines aufgeschnittenen Endab- schnitts der Lattenrostlatte nach Fig. 1; und
- Fig. 3: eine Seitenansicht einer Lattenrostlatte gemäß einer abgewan- delten Ausführungsform.

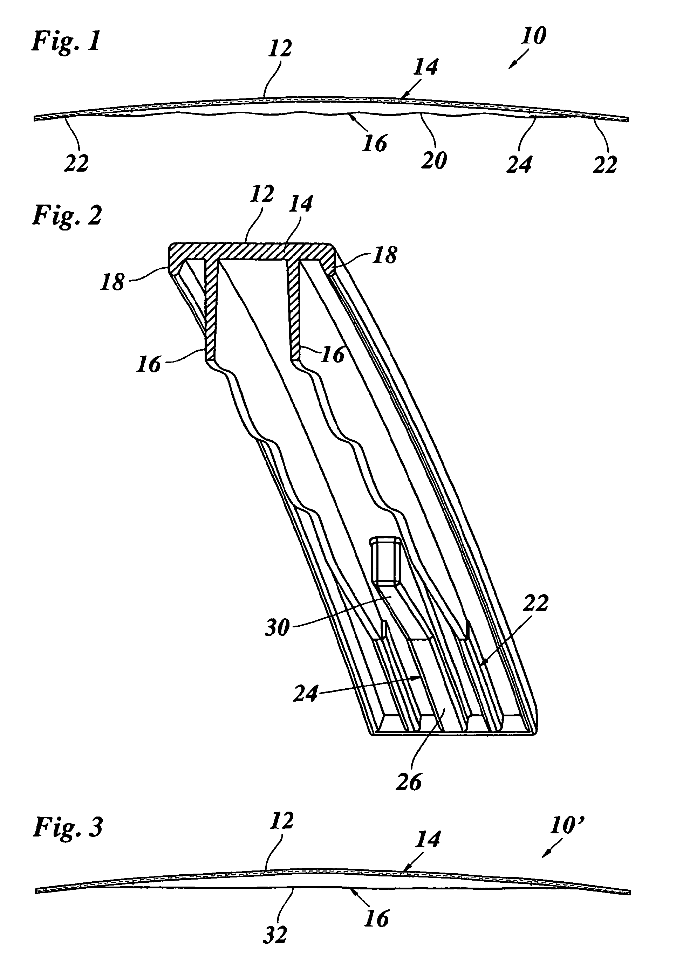

Die in Fig. 1 in einer Seitenansicht gezeigte Lattenrostlatte 10 ist in einem Stück aus glasfaserverstärktem Kunststoff hergestellt und weist eine Länge von beispielsweise etwa 87 cm auf, die der üblichen Breite eines Lattenrostes für ein Bett entspricht.

Fig. 1 zeigt die Lattenrostlatte in der Gebrauchsstellung und in unbelastetem Zustand. In diesem Zustand ist die Latte so nach oben vorgewölbt, daß ihre obere Oberfläche 12 einen Krümmungsradius in der Größenordnung von etwa 3,4 m hat. Die Latte gliedert sich in einen im wesentlichen waagerecht orientierten Hauptteil 14, der die obere Oberfläche 12 bildet, und zwei rechtwinklig zu dem Hauptteil 14 orientierte, an dessen Unterseite verlaufende Versteifungsstege 16.

Wie deutlicher in Fig. 2 zu erkennen ist, weist der Hauptteil 14 an jedem seiner längsverlaufenden Ränder einen abwärts gekröpften Flansch 18 auf. Die Breite des Hauptteils 14 von Flansch zu Flansch beträgt 25 bis 50 mm, beispielsweise etwa 36 mm, und seine Dicke beträgt zwischen den Flanschen beispielsweise etwa 3,5 - 4 mm und im Bereich der Flansche etwa 7,5 mm.

Die Versteifungsstege 16 haben in der Seitenansicht gemäß Fig. 1 eine identische Kontur, und ihre Höhe variiert auf der Länge der Lattenrostlatte. Sie ist in der Mitte der Latte am größten und nimmt zu den Enden hin ab.

In dem in Fig. 1 gezeigten Beispiel haben die Versteifungsstege 16 jeweils einen gewellten unteren Rand 20. Im Mittel verläuft dieser untere Rand 20 jedoch waagerecht, so daß die Abnahme der Höhe der Versteifungsstege 16 von der Mitte zu den Enden hin mit der Abnahme der Höhe der oberen Oberfläche 12 der Latte korrespondiert. Das bedeutet, daß die Latte insgesamt in der Mitte eine deutlich höhere Biegesteifigkeit hat als an den Enden. Durch das Vorhandensein von zwei parallelen Versteifungsstegen 16 und die Flansche 18 wird zudem eine hohe Verwindungssteifigkeit erreicht.

Die Versteifungsstege 16 haben eine Dicke in der Größenordnung von 1,5 bis 2 mm, und ihre Höhe beträgt an der höchsten Stelle beispielsweise etwa 30 mm. Zu den Enden hin laufen die Versteifungsstege 16 in Endabschnitte 22 aus, in denen die Höhe konstant ist und mit der Höhe der Flansche 18 übereinstimmt. In diesen Endabschnitten 22 hat die Latte somit insgesamt die Konfiguration einer profilierten Platte mit einheitlicher Dicke (entsprechend der Höhe der Flansche 18), die sich passend in nicht gezeigte Schuhe eines Lattenrostrahmens einstecken läßt.

An den Enden der Latte sind an der Unterseite der zudem mittig, zwischen den beiden Versteifungsstegen 16, zusätzliche Verstärkungsrippen 24 vorgesehen. Diese Verstärkungsrippen 24 haben ihrerseits Endabschnitte 26, deren Höhe mit denen der Flansche 18 übereinstimmt und die sich ebenso wie die Enden der Versteifungsstege 16 an eine die Flansche 18 verbindende Stirnwand 28 anschließen. Die inneren, zur Mitte der Lattenrostlatte weisenden Enden der Verstärkungsrippen 24 weisen in der Seitenansicht eine dreieckige Kontur auf, so daß ihre Höhe vom Endabschnitt 26 aus zum inneren Ende hin stetig zunimmt. Auf diese Weise wird eine besondere Verstärkung der Latte in den besonders beanspruchten Bereichen erreicht, in denen die Latte aus den Schuhen des Lattenrostrahmens austritt. Die Länge der Verstärkungsrippen 24 beträgt insgesamt etwa 15 cm, von denen etwa 8 cm auf die Endabschnitte 26 und etwa 7 cm auf die verstärkten Abschnitte 30 entfallen.

Fig. 3 zeigt als abgewandeltes Ausführungsbeispiel eine Lattenrostlatte 10', die den gleichen Aufbau wie die Latte nach Fig. 1 und 2 aufweist, nur mit dem Unterschied, daß die Versteifungsstege 16 einen geradlinigen unteren Rand 32 haben.

## Patentansprüche

1. Lattenrostlatte (10) aus Kunststoff, die in ihrer Gebrauchsstellung konvex nach oben vorgewölbt ist und an der Unterseite mindestens einen einstückig angeformten, rechtwinklig zur Lattenebene orientierten Versteifunssteg (16) aufweist, dessen Höhe von der Mitte zu den Enden hin abnimmt, wobe der Versteifungs- steg (16) zu den Enden der Latte hin in Endabschnitte (22) ausläuft, die eine konstante Höhe haben, und an der Unterseite der Latte an jedem Ende mindestens eine zusätzliche Verstärkungsrippe (24) vorgesehen ist, die außen einen Endabschnitt (26) mit konstanter Höhe aufweist, **dadurch gekennzeichnet, daß** sich an den Endabschnitt (26) nach innen ein verstärkter Abschnitt (30) anschließt, dessen Höhe zum inneren, zur Mitte der Lattenrostlatte (10) weisenden Ende hin stetig zunimmt.

2. Lattenrostlatte nach Anspruch 1, **dadurch gekennzeichnet, daß** sie an ihren längs verlaufenden äußeren Rändern abwärts gekröpfte Flansche (18) aufweist.

3. Lattenrostlatte nach Anspruch 2, **dadurch gekennzeichnet, daß** die Höhe der Endabschnitte (22) der Versteifungsstege mit der Höhe der Flansche (18) übereinstimmt.

4. Lattenrostlatte nach einem der vorstehenden Ansprüche, **dadurch gekennzeichnet, daß** sie aus glasfaserverstärktem Kunststoff besteht.

5. Lattenrostlatte nach Anspruch 4, **dadurch gekennzeichnet, daß** sie aus Polyamid mit einem Glasfasergehalt von 20 bis 35% besteht.

6. Lattenrostlatte nach einem der vorstehenden Ansprüche, **dadurch gekennzeichnet, daß** die Wölbung der oberen Oberfläche (12) der Latte einem Krümmungsradius entspricht, der etwa dem 3,5- bis 4-fachen der Länge der Lattenrostlatte (10; 10') entspricht.

7. Lattenrostlatte nach einem der vorstehenden Ansprüche, **dadurch gekennzeichnet, daß** der Versteifungssteg (16) einen geradlinigen oder gewellten, insgesamt jedoch auf im wesentlichen konstanter Höhe verlaufenden unteren Rand (20; 32) hat.

8. Lattenrostlatte nach einem der vorstehenden Ansprüche, **dadurch gekennzeichnet, daß** sie an der Unterseite zwei parallele Versteifungsstege (16) aufweist.

## Claims

1. A plastic slat (10) for a slatted frame, the slat being convexly bulged upwardly in the position in which it is used and having on its bottom side at least one reinforcement rib (16) that is formed integrally with the slat and is oriented normal to the plane of the slat, the height of the reinforcement rib decreasing from the centre towards the ends, wherein the reinforcement rib (16) merges towards the ends of the slat into end sections (22) that have a constant height, and the slat has at its bottom side at each end at least one additional strengthening rib (24) having an outer end portion (26) with constant height, **characterized in that**, inwardly adjoining the end portion (26), there is provided a reinforced portion (30) the height of which increases continuously towards the inner end facing towards the centre of the slat (10).

2. Slat according to claim 1, **characterized in that** it has downwardly cranked flanges (18) at its longitudinal edges.

3. Slat according to claim 2, **characterized in that** the height of the end sections (22) of the reinforcement ribs is equal to the height of the flanges (18).

4. Slat according to any of the preceding claims, **characterized in that** it is made of glass fibre reinforced plastics.

5. Slat according to claim 4, **characterized in that** it is made of polyamide having a content of glass fibres from 20 to 35%.

6. Slat according to any of the preceding claims, **characterized in that** the bulge at the top surface (12) of the slat has a radius of curvature that corresponds to the 3.5 to 4-fold length of the slat (10; 10').

7. Slat according to any of the preceding claims, **characterized in that** the reinforcement rib (16) has a lower edge (20; 32) that is straight or undulated but extends, in its entirety, essentially on a constant height.

8. Slat according to any of the preceding claims, **characterized in that** it has two parallel reinforcement ribs (16) on its bottom side.

## Revendications

1. Latte de sommier à lattes (10) en matière plastique, laquelle latte est pré-bombée de manière convexe vers le haut dans sa position d'utilisation et dont la face inférieure comporte au moins une arête de raidissement (16) moulée d'un seul tenant et orientée perpendiculairement au plan de la latte, dont la hauteur diminue du centre jusqu'aux extrémités, dans laquelle au niveau des extrémités de la latte, l'arête de raidissement (16) se termine dans des parties d'extrémité (22) ayant une hauteur constante, et à chaque extrémité de la face inférieure de la latte est prévue au moins une nervure de renfort supplémentaires (24) qui présente à l'extérieur une partie d'extrémité (26) à hauteur constante, **caractérisée en ce qu'**une partie renforcée (30) rejoint la partie d'extrémité (26) vers l'intérieur, la hauteur de la partie renforcée augmentant de manière constante jusqu'à l'extrémité intérieure située au centre de la latte du matelas à lattes (10).

2. Latte de sommier à lattes selon la revendication 1, **caractérisée en ce qu'**elle comporte, au niveau de ses bords extérieurs s'étendant longitudinalement, des rebords (18) coudés vers le bas.

3. Latte de sommier à lattes selon la revendication 2, **caractérisée en ce que** la hauteur des parties d'extrémité (22) des arêtes de raidissement correspond à la hauteur des rebords (18).

4. Latte de sommier à lattes selon l'une quelconque des revendications précédentes, **caractérisée en ce qu'**elle est constituée d'une matière plastique renforcée par des fibres de verre.

5. Latte de sommier à lattes selon la revendication 4, **caractérisée en ce qu'**elle est constituée de polyamide ayant une teneur en fibres de verre de 20 à 35 %.

6. Latte de sommier à lattes selon l'une quelconque des revendications précédentes, **caractérisée en ce que** le bombement de la surface supérieure (12) de la latte correspond à un rayon de courbure qui correspond à environ 3,5 à 4 fois la longueur de la latte de sommier à lattes (10 ; 10').

7. Latte de sommier à lattes selon l'une quelconque des revendications précédentes, **caractérisée en ce que** l'arête de raidissement (16) a un bord inférieur (20 ; 32) droit ou ondulé mais qui s'étend entièrement à une hauteur sensiblement constante.

8. Latte de sommier à lattes selon l'une quelconque des revendications précédentes, **caractérisée en ce qu'**elle comporte deux arêtes de raidissement parallèles (16) sur la face inférieure.
